Europäisches Patentamt

European Patent Office

Office européen des brevets

(19)

(11) Veröffentlichungsnummer : **0 429 514 B1**

# (12) EUROPÄISCHE PATENTSCHRIFT

(45) Veröffentlichungstag der Patentschrift :
**07.10.92 Patentblatt 92/41**

(51) Int. Cl.[5] : **G01D 5/26**

(21) Anmeldenummer : **89909548.3**

(22) Anmeldetag : **11.08.89**

(86) Internationale Anmeldenummer :
**PCT/EP89/00947**

(87) Internationale Veröffentlichungsnummer :
**WO 90/02313 08.03.90 Gazette 90/06**

(54) **OPTOELEKTRONISCHE MESSANORDNUNG.**

(30) Priorität : **16.08.88 DE 3827719**

(43) Veröffentlichungstag der Anmeldung :
**05.06.91 Patentblatt 91/23**

(45) Bekanntmachung des Hinweises auf die
Patenterteilung :
**07.10.92 Patentblatt 92/41**

(84) Benannte Vertragsstaaten :
**AT BE CH DE FR GB IT LI LU NL SE**

(56) Entgegenhaltungen :
**FR-A- 2 194 949**
**GB-A- 2 005 950**
**Patent Abstracts of Japan, volume 10, No 232**
**(P-486) (2288), 12 August 1986 & JP- A-6166911**

(73) Patentinhaber : **KLINGER, Dietmar**
**Happurger Strasse 4**
**W-8500 Nurnberg 30 (DE)**

(72) Erfinder : **KLINGER, Dietmar**
**Happurger Strasse 4**
**W-8500 Nurnberg 30 (DE)**

(74) Vertreter : **Brose, Manfred, Dr.**
**Pellergasse 45**
**W-8500 Nürnberg 50 (DE)**

## Beschreibung

Die Erfindung betrifft eine optoelektronische Meßanordnung zur Ermittlung der relativen Lage zweier Körper zueinander.

Aus der DE-PS 33 14 089 ist eine optoelektronische Meßanordnung zur Ermittlung der relativen Lage zweier Körper zueinander bekannt, mit Lichtsendern am ersten Körper, von denen Lichtstrahlen ausgehen und positionsempfindliche, zweidimensional messende Lichtempfänger am zweiten Körper, auf die die Lichtstrahlen auftreffen, wobei aus der Lage der Auftreffpunkte und der Strahlenachsen von den Lichtempfängern die gegenseitige Translation und/oder Rotation darstellende Signalpaare erzeugt werden, aus denen die relative Lage beider Körper zueinander herleitbar ist. Dieser Meßanordnung haftet jedoch der Nachteil an, daß sie drei zweidimensional messende Lichtempfänger benötigt. Da die zweidimensional messenden Lichtempfänger teuere Bauteile sind, wird hierdurch die gesamte Meßanordnung in ihrer Wirtschaftlichkeit stark beeinträchtigt.

In der Druckschrift FR-A-2 194 949 (Selcom) wird beschrieben, wie die Abbildungen mehrerer punktförmiger Lichtquellen durch eine unterschiedliche Modulation der einzelnen Lichtquellen auf einer Flächendiode unterscheidbar sind. Als Beispiele zur Anwendung der modulierten Lichtquellen werden jedoch nur Beispiele angeführt, die alle die Beobachtung des zeitlichen Ablaufes von Bewegungsvorgängen zum Ziel haben, wie z.B. eine Golfbahn, ein Sprung oder der Beginn eines 100-Meter Laufes. An keiner Stelle der Druckschrift ist jedoch ein Hinweis darauf zu finden, daß die moduliertes Licht emittierenden Lichtpunkte zusammen mit dem Empfänger zur meßtechnischen Erfassung der relativen Lage zweier Körper dienen sollen.

In der Druckschrift GB-A-2 005 950 (HAY) werden Teilberechnungen für die gegenseitige Lage zweier Systeme durchgeführt. Mit einer Kamera und weiteren Anordnungen werden Hilfsberechnungen durchgeführt, damit z.B. eine Tunnelbohrmaschine ihren geraden Kurs einhält. Die Meßtechnik über ein Weitwinkelobjektiv einer Kamera stellt eine unpräzise Messung dar. Eine Berechnung der gegenseitigen Lage von zwei Systemen in sechs Freiheitsgraden wird nicht beschrieben. Die Punkte in den Zielebenen werden mit LEDs definiert, die in Folge durch Schalter betrieben werden.

Der Erfindung liegt daher die Aufgabe zugrunde, eine optoelektronische Meßanordnung zu schaffen, die die gegenseitige Lage zweier Körper in ihren sechs Freiheitsgraden mit einer möglichst geringen Anzahl an Lichtempfängern ermöglicht.

Diese Aufgabe wird nach der Erfindung wie im Patentanspruch 1 angegeben gelöst. In den abhängigen Patentansprüchen 2 bis 7 sind Fortbildungen der Erfindung beschrieben.

In den Zeichnungen sind Ausführungsbeispiele der Erfindung wiedergegeben. Es zeigen :

Fig. 1 eine Prinzipdarstellung von Lichtsendern und Lichtempfänger,

Fig. 2 einen senkrechten Schnitt durch einen Joystick und

Fig. 3 einen teilweisen Schnitt durch ein Handhabungsgerät.

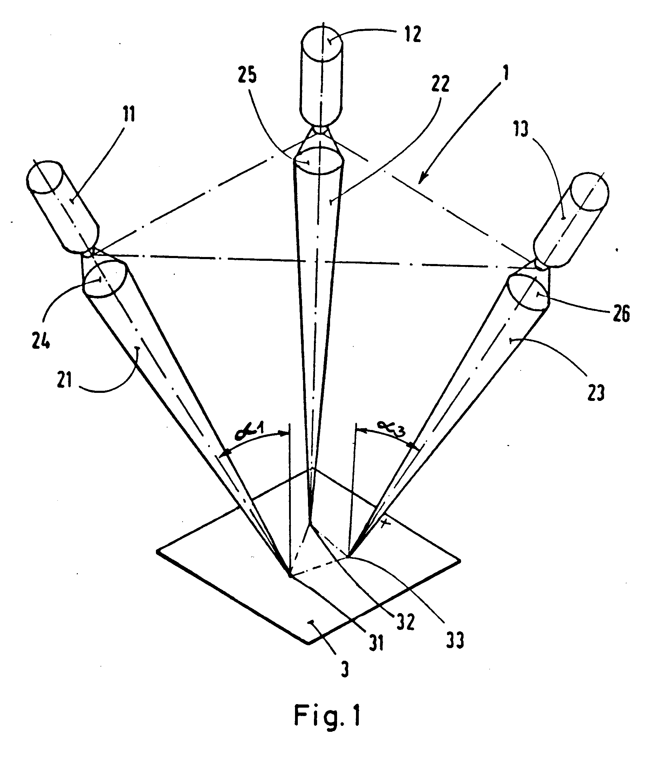

In Figur 1 ist eine optoelektronische Meßanordnung 1 schematisch wiedergegeben. Die Meßanordnung 1 besteht aus den am ersten Körper angeordneten, beispielsweise drei Lichtsendern 11, 12, 13, von denen Lichtstrahlen 21, 22, 23 ausgehen und einem positionsempfindlichen, zweidimensional messenden Lichtempfänger 3 am zweiten Körper. Die Lichtstrahlen 21, 22, 23 werden beispielsweise durch Optiken 24, 25, 26 auf den Lichtempfänger 3 konzentriert. Die am ersten Körper angeordneten Lichtsender 11, 12, 13 bilden die Eckpunkte eines ersten Dreiecks.

Die Achsen der Lichtstrahlen 21, 22, 23 stellen paarweise verschiedene Richtungsvektoren dar und schneiden jeweils mit unterschiedlichen Winkeln, beispielsweise den drei Winkeln $\alpha 1$, $\alpha 2$, $\alpha 3$ den Lichtempfänger 3. Aus zeichnerischen Gründen ist es in Figur 1 nicht möglich, den Winkel $\alpha 2$ einzuzeichnen. Die Auftreffpunkte 31, 32, 33 der Lichtstrahlen 21, 22, 23 bilden auf dem Lichtempfänger 3 ein zweites Dreieck. Durch die Verwendung von mehr als drei Lichtquellen sind anstelle der beiden Dreiecke jeweils Vielecke vorhanden.

Mit der vorbeschriebenen prinzipiellen Meßanordnung wird die Messung nun in der Weise durchgeführt, daß die Lichtsender 11, 12, 13 in umlaufender Folge Ein-Aus modulierte, sich in ihrer zeitlichen Länge nicht überschneidende Lichtstrahlimpulse aussenden. Hierdurch können die jeweiligen Koordinaten x, y der drei Auftreffpunkte 31, 32, 33 einzeln nacheinander ermittelt werden. Aus dem Verhältnis einer Null- oder Referenzmessung zu einer aktuellen Messung ergibt sich eindeutig die relative Lageveränderung beider Körper zu,einander. Werden mehr als drei Lichtsender verwandt, dann können mit jeweils drei dieser Lichtsender die vorbeschriebenen Messungen durchgeführt und die Ergebnisse untereinander verglichen und überprüft werden. Ergibt sich hierbei, daß ein Wert von den übrigen Ergebnissen signifikant abweicht was beispielsweise dann der Fall sein kann, wenn zwei Lichtpunkte eines Lichtpunktdreieckes 31, 32, 33 zu dicht nebeneinander liegen oder alle drei Lichtpunkte 31, 32, 33 auf einer Geraden liegen, so wird dieser Wert ausgeschieden. Hierdurch kann die Sicherheit und die Genauigkeit der Messung beträchtlich gesteigert werden.

Zur Erzeugung der Lichtstrahlen 21, 22, 23 können vorzugsweise Laser, Laserdioden, LE-Dioden oder andere Lichtquellen verwendet werden, deren Licht durch Lichtleiter, Optiken od.dgl. geleitet wird.

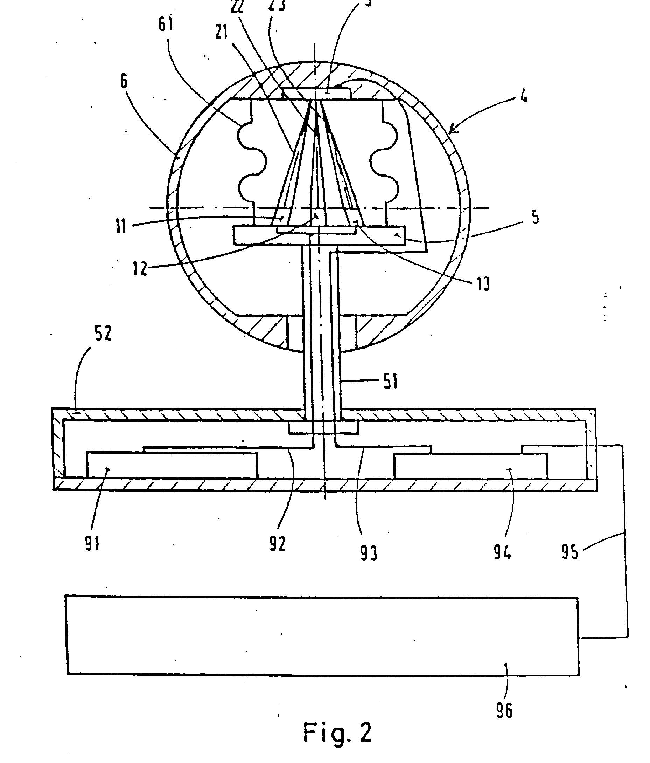

Als ein erstes Anwendungsbeispiel ist in Figur 2 ein Steuergriff 4 eines mehrdimensionalen Joysticks wiedergegeben. Der Steuergriff 4 besteht aus dem Grundkörper 5 und dem Griffstück (Handgriff) 6. Der Grundkörper 5 ist über einen Stiel 51 an einem Sockel 52 gelagert. Auf der Oberseite des Grundkörpers 5 befinden sich die drei Lichtsender 11, 12, 13, die ihre Lichtstrahlen 21, 22, 23 auf den Lichtempfänger 3 werfen. Durch den hohlen Stiel 51 führt die Leitung 92 von der Sendeelektronik 91 zu den Lichtsendern 11, 12, 13 und die Leitung 93 von dem Lichtempfänger 3 zur Empfangselektronik 94. Die Lichtsender 11, 12, 13 und der Lichtempfänger 3 sind von einem elastischen Element, vorzugsweise einem Federbalg 61 umhüllt. Durch den Federbalg 61 wird gleichzeitig eine gegenseitige Nullage fixiert. Oer Federbalg 61 bildet gleichzeitig auch eine staub- und wasserdichte Umhüllung.

Der Lichtempfänger 3 kann eine Quadranten-, Matrix- oder Lateraleffektdiode oder ein CCD-Empfänger sein.

Der vorstehend beschriebene Steuergriff 4 läßt eine Steuerung mit sechs Freiheitsgraden zu, da das Griffstück 6 gegenüber dem Grundkörper 5 räumlich bewegbar ist und somit drei Freiheitsgrade für Translation und drei Freiheitsgrade für Rotation hat. Diese sechs Dimensionen sind zur Steuerung eines Handhabungsgerätes mit sechs oder weniger Freiheitsgraden verwendbar. Werden jedoch nur die Freiheitsgrade in einer Ebene benutzt, nämlich zwei Freiheitsgrade für die Translation und ein Freiheitsgrad für die Rotation, dann kann hiermit auf einem Bildschirm ein Cursor verschoben oder ein cursorähnlicher Pfeil verschoben und/oder verdreht werden. Seine Einsatzmöglichkeiten gehen damit über die einer "Maus" hinaus, mit der ein Cursor lediglich auf dem Bildschirm verschiebbar ist.

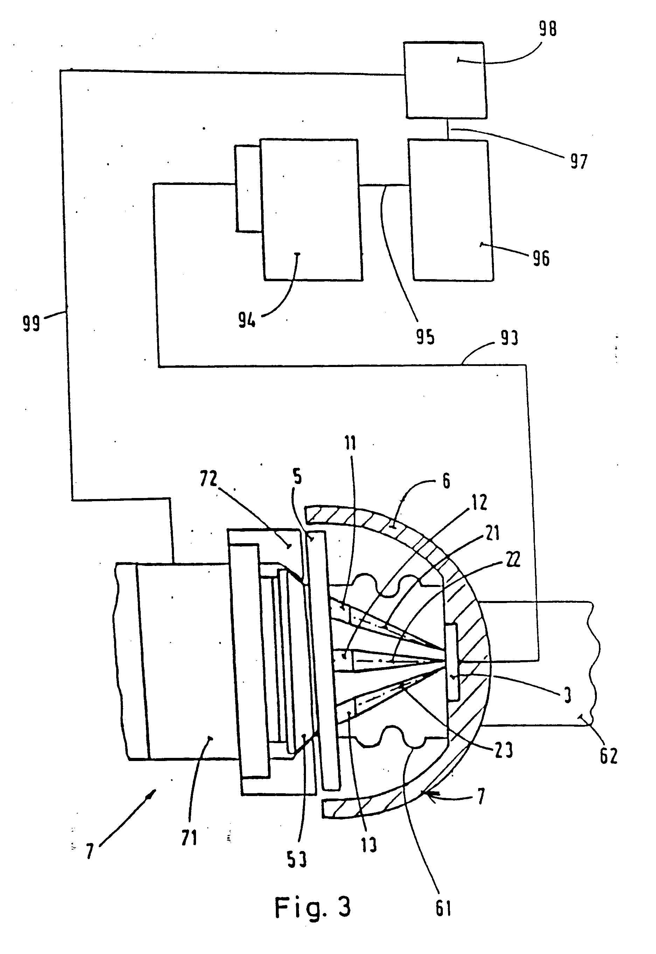

In Figur 3 ist als zweites Anwendungsbeispiel eine vereinfachte Darstellung eines Handhabungsgerätes 7 wiedergegeben. Hierbei ist ein ortsfestes Griffstück 6 vorhanden, das mit einem Befestigungsträger 62 ortsfest gelagert ist. Das Griffstück 6 besteht aus einer etwa halbkugeligen Schale, in der der Lichtempfänger 3 gelagert ist. Der kreisförmige Grundkörper 5 trägt die Lichtsender 11, 12, 13, die Lichtstrahlen 21, 22, 23 auf den Lichtempfänger 3 werfen. Der Grundkörper 5 ist durch den Federbalg 61 elastisch am Griffstück 6 gelagert. Am Grundkörper 5 ist ein Flansch 53 befestigt. An einem Ausleger des Handhabungsgerätes 7 befinden sich die Kupplung 71 mit Greifern 72, die bei einer Ankopplung den Flansch 53 umfassen und damit das System in Meßstellung bringen.

Die in Figur 2 wiedergegebene Steuerung der Lichtsender 11, 12, 13 erfolgt durch eine Sendeelektronik 91, die durch eine Leitung 92 mit den Lichtsendern 11, 12, 13 verbunden ist und diese Ein-Aus moduliert. Entsprechend Figur 2 und Figur 3 werden die Empfangssignale des Lichtempfängers 3 durch die Empfangsleitung 93 zu einer Empfangselektronik 94 geleitet, die über eine Leitung 95 zu einer Rechnerschnittstelle mit einem Auswertrechner 96 verbunden ist.

In Figur 3 leitet dann eine Leitung 97 zwischen dem Rechner und der Steuereinheit die errechneten Werte zu einer Steuereinheit 98, die ihrerseits über die Leitung 99 das Handhabungsgerät 7 steuert.

Bezugzeichenliste

| 1 | Meßanordnung |
|---|---|
| 11, 12, 13 | Lichtsender |
| 21, 22, 23 | Lichtbündel |
| 24, 25, 26 | Optiken |
| 3 | Lichtempfänger |
| 31, 32, 33 | Auftreffpunkte |
| 4 | Steuergriff |
| 5 | Grundkörper |
| 51 | Stiel |
| 52 | Sockel |
| 53 | Flansch |
| 6 | Griffstück (Handgriff) |
| 61 | Federbalg |
| 62 | Befestigungsträger |
| 7 | Handhabungsgerät |
| 71 | Kupplung |
| 72 | Greifer |
| 9 | Sende-Empfangs Elektronik |
| 91 | Sendeelektronik |
| 92 | Senderleitung |
| 93 | Empfängerleitung |

94 Empfängerelektronik
95 Leitung Rechnerschnittstelle
96 Auswertrechner
97 Leitung Rechner-Steuereinheit
98 Steuereinheit
99 Steuerleitung

**Patentansprüche**

1. Optoelektronische Meßanordnung (1) zur Ermittlung der relativen Lage zweier Körper (5, 6) zueinander, mit Lichtsendern (11, 12, 13) am ersten Körper (5), von denen Lichtstrahlen ausgehen und positionsempfindliche, zweidimensional messende Lichtempfänger (3) am zweiten Körper (6), auf die die Lichtstrahlen (21, 22, 23) auftreffen, wobei aus der Lage der Auftreffpunkte und der Strahlenachsen von den Lichtempfängern (3) die gegenseitige Translation und/oder Rotation darstellende Signalpaare erzeugt werden, aus denen die relative Lage beider Körper (5, 6) zueinander herleitbar ist, dadurch gekennzeichnet, daß die Lichtbündelachsen der mindestens drei die Eckpunkte eines ersten Vielecks bildenden Lichtsender paarweise verschiedene Richtungsvektoren darstellen, und daß eine Steuereinheit (98) über eine Sendeelektronik (91) die Lichtsender (11, 12, 13) in umlaufender Folge Ein-Aus moduliert und letztere in ihrer zeitlichen Länge sich nicht überschneidende Lichtimpulse aussenden.

2. Meßanordnung nach Anspruch 1, dadurch gekennzeichnet, daß die Lichtsender (11, 12, 13) und der Lichtempfänger (3) in einem den ersten Körper (5) umschließenden zweiten Körper (6) angeordnet sind.

3. Meßanordnung nach Anspruch 2, dadurch gekennzeichnet, daß der erste Körper (5) und der zweite Körper (6) durch ein elastisches Element (61) miteinander verbunden sind.

4. Meßanordnung nach Anspruch 3, dadurch gekennzeichnet, daß das elastische Element ein die Lichtsender (11, 12, 13) und den Lichtempfänger (3) staub- und wasserdicht umschließender Federbalg (61) ist.

5. Meßanordnung nach den Ansprüchen 1 bis 4, dadurch gekennzeichnet, daß der Lichtempfänger (3) eine Quadranten-, Matrix- oder Lateraleffektdiode oder ein CCD-Empfänger ist.

6. Meßanordnung nach den Ansprüchen 1 bis 5, dadurch gekennzeichnet, daß an einem (6) der beiden Körper ein Handgriff (6) angeordnet oder dieser als Handgriff (6) ausgebildet ist, der andere (5) der beiden Körper ortsfest ist.

7. Meßanordnung nach den Ansprüchen 1 bis 6, dadurch gekennzeichnet, daß die Signalpaare zur Fernsteuerung eines Handhabungsgerätes (7) oder zur Steuerung einer "3-D"-Graphik auf einem Bildschirm dienen.

**Claims**

1. Opto-electronic measuring arrangement (1) for the ascertaining of the relative position of two bodies (5, 6) with respect to one another, with light emitters (11, 12, 13), from which light beams issue at the first body and position-sensitive two-dimensional measuring light receiver (3), on which the light beams (21, 22, 23) are incident, at the second body (6), wherein signal pairs, which represent the mutual translation and/or rotation and from which the relative position of both bodies (5, 6) to one another can be deduced, are generated by the light receiver (3) from the position of the points of incidence and the beam axes, characterised thereby that the light beam axes of the at least three light emitters, which form the corner points of a first rectangle, represent directional vectors differing in pairs, and that a control unit (98) modulates the light emitters (11, 12, 13) on-off in rotating sequence by way of an electronic signalling device (91) and the light emitters emit light pulses which do not overlap in their temporal length.

2. Measuring arrangement according to claim 1, characterised thereby that the light emitters (11, 12, 13) and the light receiver (3) are arranged in a second body (6) surrounding the first body (5).

3. Measuring arrangement according to claim 2, characterised thereby that the first body (5) and the second body (6) are connected with each other by an elastic element (61).

4. Measuring arrangement according to claim 3, characterised thereby that the elastic element is a spring bellows (61) dusttightly and water-tightly surrounding the light emitters (11, 12, 13) and the light receiver (3).

5. Measuring arrangement according to the claims 1 to 4, characterised thereby that the light receiver (3) is a quadrant, matrix or lateral effect diode or a CCD receiver.

6. Measuring arrangement according to claims 1 to 5, characterised thereby that a handle (6) is arranged at one (6) of the two bodies or this is constructed as a handle (6), and the other (5) of the two bodies is stationary.

7. Measuring arrangement according to the claims 1 to 6, characterised thereby that the signal pairs serve for the remote control of a manipulation apparatus (7) or for the control of a "3-D" graphic on an image screen.

**Revendications**

1. - Système de mesure opto-électronique (1) pour la détermination de la position relative de deux corps (5, 6), comprenant des émetteurs de lumière (11, 12, 13) sur le premier corps (5) desquels partent des faisceaux lumineux, et des récepteurs de lumière (3) sur le second corps (6) sensibles à la position et effectuant une mesure bidimensionnelle, qui reçoivent les faisceaux lumineux (21, 22, 23), les récepteurs de lumière (3) générant à partir de la position des points d'impact et des axes des faisceaux, les paires de signaux représentant la translation et/ou la rotation mutuelle qui permettent de déduire la position relative des deux corps (5, 6), **caractérisé en ce** que les axes des faisceaux lumineux d'au moins trois émetteurs de lumière formant les angles d'un premier polygone représentent par paires différents vecteurs de direction, et qu'une unité de commande (98) assure par l'intermédiaire d'une électronique d'émission (91), dans l'ordre tournant, la modulation marche-arrêt des émetteurs de lumière (11, 12, 13) lesquels émettent des impulsions lumineuses qui ne se recoupent pas quant à leur durée.

2. - Système de mesure selon la revendication 1, caractérisé en ce que les émetteurs de lumière (11, 12, 13) et le récepteur de lumière (3) sont disposés dans un second corps (6) qui enveloppe le premier corps (5).

3. - Système de mesure selon la revendication 2, caractérisé en ce que le premier corps (5) et le second corps (6) sont reliés entre eux par un élément élastique (61).

4. - Système de mesure selon la revendication 3, caractérisé en ce que l'élément élastique est un soufflet (61) qui entoure les émetteurs de lumière (11, 12, 13) et le récepteur de lumière (3) de manière étanche à la poussière et à l'eau.

5. - Système de mesure selon l'une des revendications 1 à 4, caractérisé en ce que le récepteur de lumière (3) est une diode quadrantale, matricielle ou à effet latéral ou un capteur CCD.

6. - Système de mesure selon l'une des revendications 1 à 5, caractérisé en ce sur l'un (6) des deux corps est montée une poignée (6) ou que ledit corps est conformé en poignée (6) et que l'autre corps (5) est stationnaire.

7. - Système de mesure selon l'une des revendications 1 à 6, caractérisé en ce que les paires de signaux servent à la commande à distance d'un appareil de maniement (7) ou à la commande d'un graphique "3-D" sur un écran.

Fig. 1

Fig. 2

Fig. 3